# EUROPEAN PATENT SPECIFICATION

(11) **EP 0 705 164 B1**
(45) Date of publication and mention of the grant of the patent: **23.12.1998**
(21) Application number: 94919916.0
(22) Date of filing: 06.06.1994
(51) Int. Cl.: B30B 9/30, A01F 15/07

(54) **DEVICE FOR PRESSING**
PRESSE
PRESSE

(30) Priority: 24.06.1993 SE 9302191
(43) Date of publication of application: 10.04.1996
(73) Proprietor: BALA INDUSTRI AB, S-465 91 Nossebro (SE)
(72) Inventor: ANSBJER, Jan, S-465 91 Nossebro (SE); ANSBJER, Bo, S-465 91 Nossebro (SE)
(74) Representative: RACKETTE Partnerschaft Patentanwälte
(86) International application number: PCT/SE94/00541
(87) International publication number: WO 95/00324

(56) References cited:
- SE-B- 431 049

## Description

The present invention refers to a device at a round baling plant for goods, such as for example waste, fibre material and the like, including a drivable pressing part for receiving and compressing of intended goods as well as an output part for the pressed bale.

Today it is difficult and expensive for the municipalities to construct approved waste depots. Waste transports are expensive. Special dust lorries transport proportionably small amounts of waste per journey and are driven empty during the return trips. On the conventional stores it is also required that the waste is covered by earth/clay once a day. The most disquieting for the future are the great environmental hazards with soaking of dangerous substances in the ground-water as well as the toxic gases wich are formed during the fermentation process of the waste.

Handling of waste in the present-day situation is an extensive enterprise which includes several different stages and actions, such as for example gathering, packeting, packing together, transport, storage , sorting, using of content etc. One thing is sure, and that is that the amount of waste, which may include recycleable as well as flammable, compostable as well as purely storageable parts, grows from year to year and that problems consequently arise to handle this growing amount.

The above problem is solved to a great extent by compressing the wastees and coat the compressed amount of waste airtight with plastic. This gives among other things:
Greater flexibility. Instead of waste and other waste goods being loaded in comprimator lorries it is supplied directly to a compressing plant and after compression fed out as ready pressed bales.
Higher efficiency. The compressing plant can be mobile and thereby several smaller receiving stations may be present, so that the distances of the waste transports diminishes.
Cleaner receiving stations. When the amount of loose waste diminishes, the discomforts for people in the neighbourhood diminish.
Less odour. When the bale is coated with plastic the fermentation and the mouldering process in the wastees ceases.
Less volume. A round bale of 1200 x 1200 mm weighs in average 900 kg.
Cheaper transports. Rather than special cars relocating the waste up to 10 mile simple journey now the dust bales may be interstored next to the pressing station. They are then transported with common tour vehicles/transport lorries to either final storage, a firing station or a recycling company.
Better exploitation of an existing transport system. A tour vehicle which has not received full load may complete with dust bales. Truck-drivers can exploit waiting periods, in which they otherwise would not have time to transport new goods, to transport dust bales.
The waste depots may store more waste on a smaller area. Thereby much money is saved. The construction of a waste depot is very costly and it is difficult to find an approved site.
No soaking of poisons into the ground-water. The bales are coated airtight with plastic. No water enters which may release chemicals (as long as the bales do not stand in water).
No toxic gases. Mouldering and fermentation ceases since no oxygen comes to. The bales must be handled in such a way that the plastic not is damaged.

A previously known round bale press for waste and the like goods, see SE,B,431049, includes a laterally open press consisting of rollers placed in ring shape. Much goods thereby falls out from the press at lateral openings and the driving of the rolls is complicated to solve at among other things dirty goods.

The main object of the present invention is therefore at first hand to solve said problem with simple but yet robust and durable means.

Said object is achieved by means of a device according to claim 1 of the present invention, which mainly is characterized therein, that the pressing part includes an endless mat, that is drivable, guided as well as formable to constitute a compressing chamber, whereby the mat driving part is constituted by rotateable end discs in pairs which exhibit driving connections cooperative with the pressing mat.

The invention is described in the following as a preferred embodiment, whereby is referred to the enclosed drawings, on which
Figure 1 shows a perspective view of a round baling plant with press mat shown in opened position and with the driving end discs in folded out position,

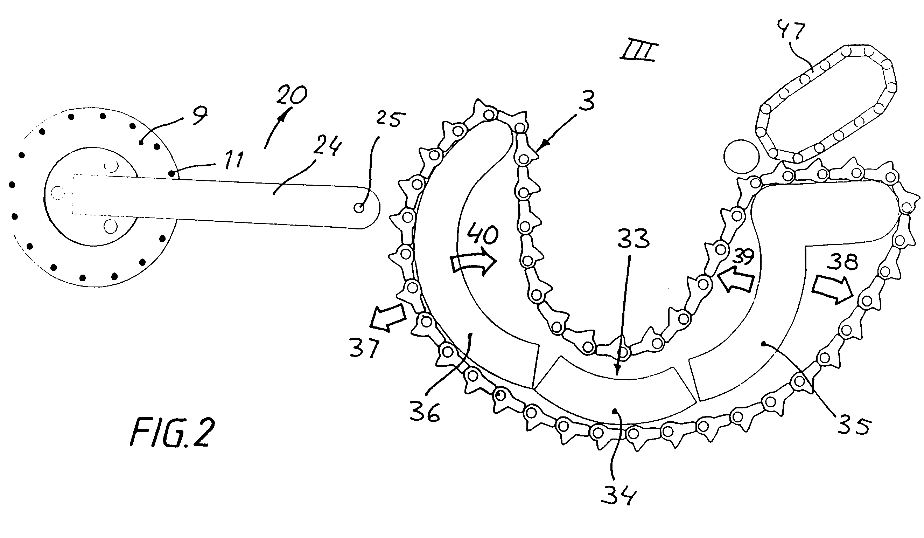

Figure 2 shows a diagrammatic lateral view of the plant in said positions,

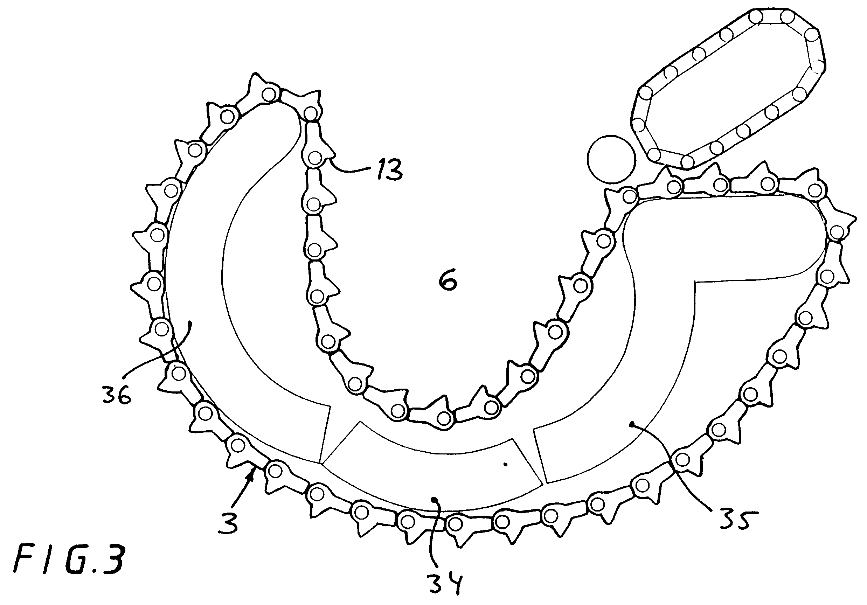

Figure 3 shows the plant in bale extraction prepared position,
Figure 4 shows the plant in a bale pressing position,

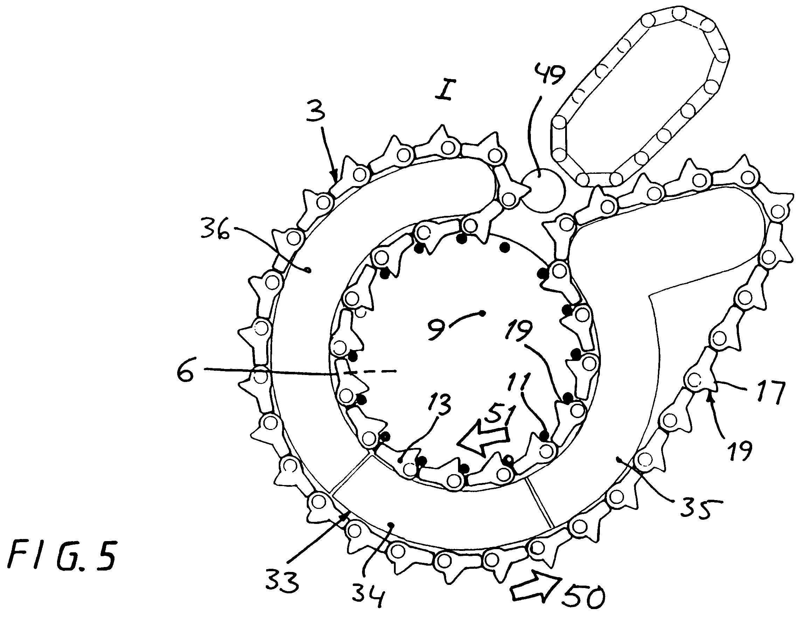

Figure 5 shows the plant in said bale pressing position without end disc and bale pivot arms shown,

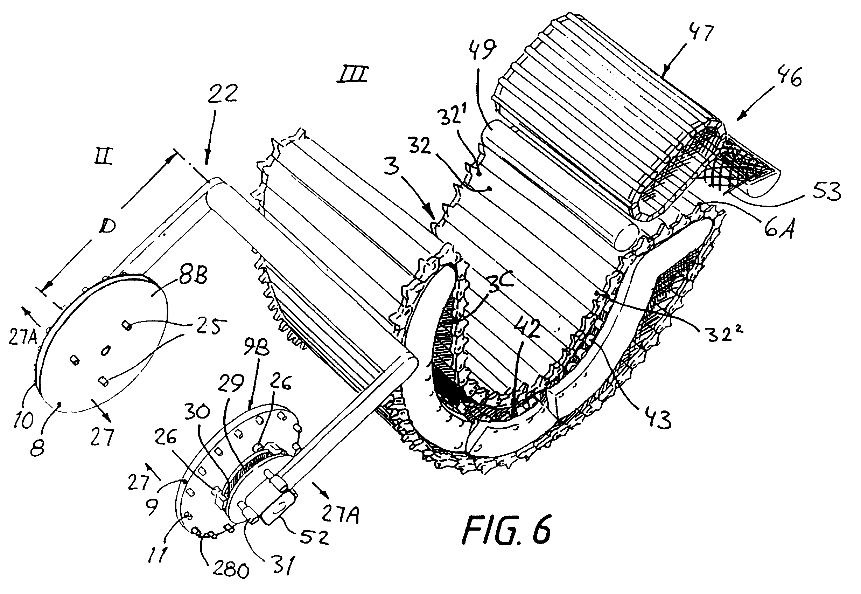

Figure 6 shows a perspective view of the plant with a net wrapping part comprised, and
Figure 7 shows a perspective view of support and driving means respectively for a pressing mat.

According to the present invention a device 1 by a round baling plant 2 for goods, such as for example waste, fibre material and the like, includes a drivable pressing part 3 for receiving and pressing of intended goods as well as an output part 4 for the pressed bale5,which has the pressing part 3 designed as an endless mat and which is drivable, guided as well as formable to constitute a compressing chamber 6.

The driving part 7 is constituted by rotateable end discs 8, 9 in pairs which exhibit driving connections 10, 11, 12, 13, which are cooperative with the pressing mat 3. More exactly external power transmission means 10, 11 are preferably evenly distributed along at least one of the sides of the end disc 8A, 9A and which are arranged axially projecting from an intended compressing chamber 6 when the end discs 8, 9 are placed in position I beside said compressing chamber 6 somewhat indented versus the mat 3.

The power transmission means, which for instance is formed by several conveyor pins 10, 11 projecting axially from the end disc 8, 9, are circularly distributed along at least one side 8A, 9A of the end disc facing outwards of the intended compressing chamber 6 . These conveyor pins 10, 11 are in driving engagement with the pressing mat 3, cooperative with driving meshing means 12, 13, which are distributed with corresponding distance A between themselves, which conforms with the operative distance B between the conveyor pins 10, 11, and which are distributed along the length extension of the mat.

The mat 3 along at least one of its lateral edges 3A, 3B exhibits several bosses 12, 13 at a mutual distance A from each other, distributed along the length extension of the mat.

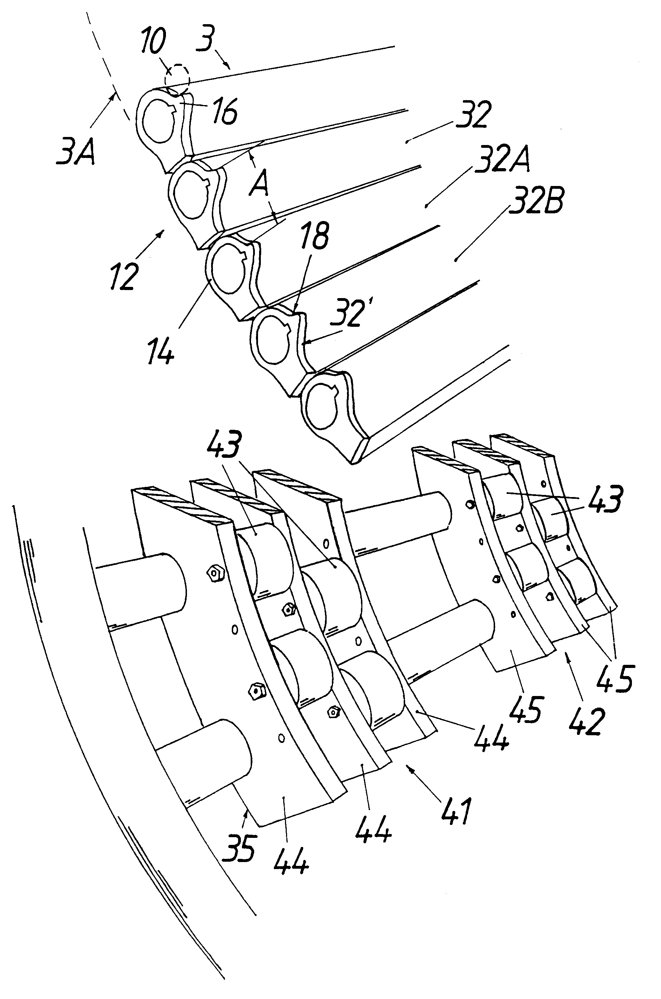

It appears from for instance Figure 7, that a mat end edge 3A exhibits bosses 12, 13 from a part 16, 17 radially projecting from an essentially cylindric body 14, which has a pin receiving space 18, 19 shape adapted to a conveyor pin 10, 11 .

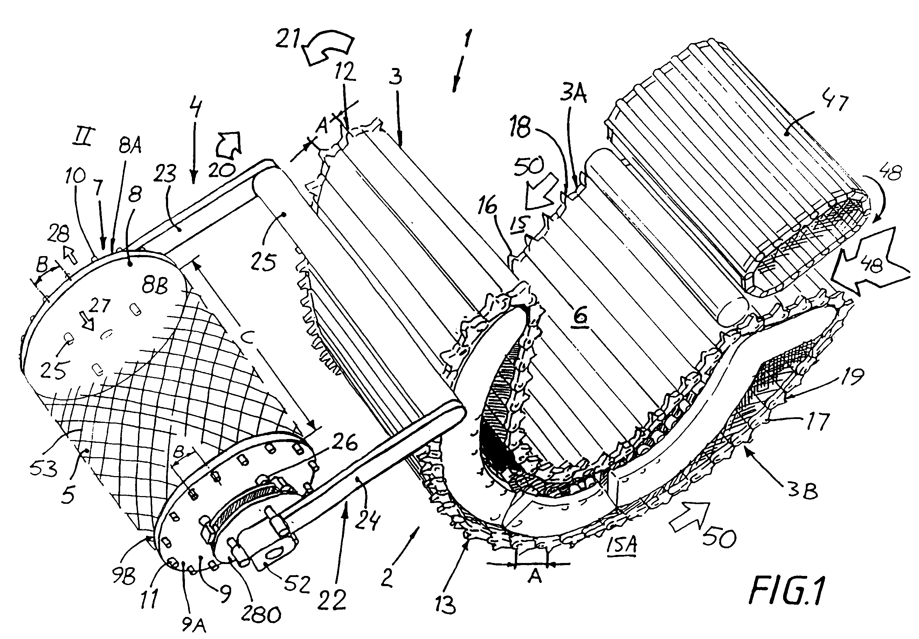

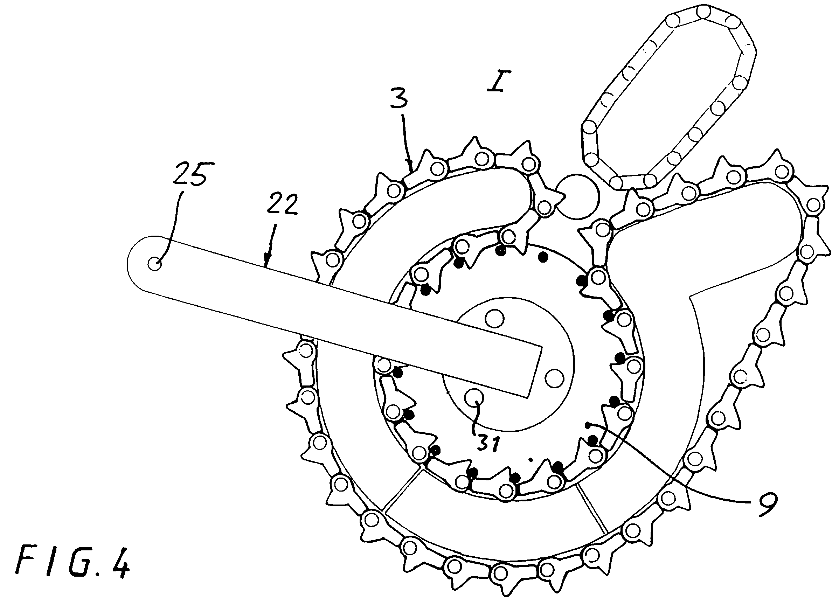

In addition to the driving function as well as the sealing function for the compressing chamber 6 at the both open ends 15, 15A thereof both driving and forming end discs 8, 9 kept at a mutual distance C from each other have also the function to operate as a bale hoisting device and thereby hold a pressed bale 5 during said lifting phase. For said lifting purposes the end discs 8, 9 are pivotably 20, 21 supported in a direction against 20 and from the compressing chamber 6 of an arm construction 22 respectively. This lift arm construction 22 can consist of two arms 23, 24 connected with each other via a pivot joint 25. The lift arm construction 22 further may exhibit an adapted length extension D to be able to lead the end discs 8, 9 between a baling position I, as is shown in Figure 4, and from there a swung out position II, which is shown in Figure 1, which is suitable for delivery of a pressed bale 5 from the arms 23, 24 and the end discs 8, 9 to a subsequent working station for an automatic airtight wrapping with a plastic film or a similar airtight cover.

In order to achieve holding of a pressed bale 5 to the end discs 8,9 during of the plant operating course the end discs 8, 9 may exhibit a number of bale fastening means 25, 26 acting axially. Said bale fastening means, which can be formed by a number spears 25, 26 and which is insertable movable axially 27 against the inside of the compressing chamber and extending respectively through the end discs 8, 9 to be launched out 27A therefrom influenceably guided from an axially movable actuateable disc 280, acts between a position where it is inserted on the inside of an end disc 8, 9 respectively conveyable outside the bale pressing part of said end disc, that is the inside 8B, 9B of the respective end disc 8,9.

Actuation of the disc 280 may occur via a number of race means 30 in radial grooves 29 located in the middle of the disc received, which race means are connected to the spears 25, 26. Actuation of for instance the hydraulic acting driving means 31, for instance hydraulic piston cylinders, entails axial displacement 27, 28 of the spears 25, 26.

The pressing mat 3 can be formed by several closely connected pivotable articulated plate shaped slats 32, 32A, 32B ... of metal or other hard material and which exhibit driving engagement means 12, 13 by respective opposite from each other facing end edge side 32¹ and 32² respectively.

Further the pressing mat 3 can be formably guided by a movable guide frame 33, forming a substantially annular shaped compressing chamber 6, which frame is divided 34, 35, 36 and force actuated by means of for instance hydraulic driven jacks not shown to be swung between a swung out 37, 38 opened bale retracting position III and a swung inwards 39, 40 closing position I, and that storage means 41, 42 are present along said guide frame 33, cooperative with the surface 3C of the press mat turned away from the compressing chamber 6, preferably roller bearings.

The frame parts 34-36 can be pivotable connected to each other laterally and each exhibit the shape of an arch part, similar to bananas, with for example rolls 43 pivotably journalled between the frame bearing supports 44, 45.

The function of the invention should have been obvious of the above described and the matter shown on the drawings, but concisely may be stated that in the intended compressing plant 2, in order to shape round bales 5 of waste and similar goods, the goods is brought via a feeder 46 formed between a precompression band 47, which runs in the feeding direction 48, and the outside 6A of the pressing mat 3 before this has reached into the compressing chamber 6 during its operation, and that a press roller 49 also is present. The goods may after the precompression rotate round in the compressing chamber 6, which laterally is sealed by the end discs 8, 9, by means of which the pressing mat 3 is driven in the race direction 50. Before relinking about the frame 33 the race direction 50 of the mat is reverse to the race direction 51 of the end discs 8, 9, which are driven by suitable means, for instance hydraulic motors 52 situated at each of the end disc 8, 9. The goods may rotate round until maximal pressure has been achieved. Net or bale yarn 53 is wound round the bale 5 to fix it in its compressed form. The bale press 3 is then opened, so that the finished bale 5 can be withdrawn by means of the pivot arms 23, 24. The compressing chamber is closed and new goods starts to be fed into in the plant 2.

Suitable fields of application are for instance: for households, industrial waste, recyclable paper, recyclable plastic or other recyclable material and also for building waste and other unsorted container waste.

Alternative fields of application are for instance: compression of industrial manufacturing material, such as cotton, sheep's wool etc., respectively compression/baling of energy forest instead of using wood chips choppers which give low volume weight.

"The energy bales" should be able to lie outdoors in piles and dry, in contrast to wood chips which must be dried by energy devouring fans in order not take heat and get mouldy.

## Claims

1. Device (1) at round baling plant (2) for goods, such as for example waste, fibre material and the like, including a drivable pressing part (3) for receiving and compressing of intended goods as well as an output part (4) for the compressed bale (5), **characterized** therein, that the pressing part includes an endless mat (3), that is drivable, guided as well as formable to constitute a compressing chamber (6), whereby the mat driving part (7) is constituted by rotateable end discs in pairs (8, 9), which exhibit driving connections (10-13) cooperative with the pressing mat (3).

2. Device according to claim 1,
**characterized** therein, that power transmission means (10, 11) which are distributed along at least one of the sides (8A, 9A) of the end discs facing outwards of the intended compressing chamber (6) is cooperative with meshing means (12, 13) distributed along the length extension of the mat.

3. Device according to claim 2,
**characterized** therein, that the power transmission means is formed by conveyor pins (10, 11) projecting axially from the end disc (8, 9) and that the mat (3) along its lateral edge exhibits bosses (12, 13) distributed at a mutual distance (A) from each other.

4. Device according to claim 3,
**characterized** therein, that the bosses (12,13) exhibit a part (16,17) which projects radially from an essentially cylindric body (14), which has a receiving space (18,19) that is shape adapted to a conveyor pin (10,11).

5. Device according to any of the patent claims 1-4,
**characterized** therein, that the driving - and forming end discs (8,9), which are rotateably driven, function as a bale hoisting device.

6. Device according to claim 5,
**characterized** therein, that the end discs (8, 9) is pivotably supported by an arm construction (22), which exhibits adapted length extension (D) in order to lead the end discs (8, 9) between a baling position (I) and a swung out position (II) for delivery of a compressed bale (5) to subsequent wrapping with plastic film or with a similar envelope.

7. Device according to any of the patent claims 5-6,
**characterized** therein, that the end discs (8, 9) exhibit axially acting bale fastening means (25, 26), inserted between on the inside (8B, 9B) of an end disc (8, 9) and conveyable outside the bale pressing part of said end disc respectively, and which are constituted by spears extending through the end discs (8, 9) actuateably guided from an axially movable actuateable disc (280) via race means (30) received in the tracks (29) of the disc, which race means are connected with the spears (25, 26).

8. Device according to any of above stated claims,
**characterized** therein, that the pressing mat (3) is formed by several tightly connected pivotable articulated plate shaped slats (32, 32A, 32B) of metal or other hard material and which exhibit driving meshing means (12, 13) at opposite from each other facing end edge side (32¹, 32²) respectively.

9. Device according to any of above stated claims,
**characterized** therein, that the pressing mat (3) is formably guided by a movable guide frame (33) to form a mainly annular compressing chamber (6), as is divided (34-36) and force actuated to be swung between a swung out opened bale retracting position (III) and a swung in closing position (I), and that bearing means (41, 42) are provided along said guide frame (33) cooperative with the surface 3A of the pressing mat, off facing the compressing chamber (6), preferably roller bearings (43).

## Patentansprüche

1. Vorrichtung (1) einer Rundballenanlage (2) für Güter wie beispielsweise Abfall, Fasermaterial und dergleichen, die einen verfahrbaren Pressabschnitt (3) zum Empfang und zum Zusammenpressen der beabsichtigten Güter als auch einen Ausgabeabschnitt (4) für die zusammengepreßten Ballen (5) aufweist, **dadurch gekennzeichnet,** daß der Pressabschnitt eine Endlosmatte (3) aufweist, die antreibbar, geführt und ebenso zum Ausbilden einer Kompressionskammer (6) formbar ist, wobei der Mattenantriebsabschnitt (7) durch drehbare Endscheibenpaare (8, 9) ausgebildet ist, die mit der Pressmatte (3) zusammenwirkende Antriebsanbindungen (10 - 13) aufweisen.

2. Vorrichtung nach Anspruch 1, dadurch gekennzeichnet, daß Leistungsübertragungsmittel (10, 11), die zumindest entlang einer der Seiten (8A, 9A) der Endscheiben angeordnet sind und von der vorgesehenen Presskammer (6) nach außen ragen, mit in Längsrichtung an der Matte angeordneten Zahngliedteilen (12, 13) zusammenwirken.

3. Vorrichtung nach Anspruch 2, dadurch gekennzeichnet, daß die Leistungsübertragungsmittel durch axial von der Endscheibe (8, 9) hervorstehende Transportstifte (10, 11) ausgebildet sind und daß die Matte (3) entlang ihrer Seitenkante Vorsprünge (12, 13) aufweist, die einen gegenseitigen Abstand (A) voneinander aufweisen.

4. Vorrichtung nach Anspruch 3, dadurch gekennzeichnet, daß die Vorsprünge (12, 13) einen radial von einem im wesentlichen zylindrischen Rumpfkörper (14) hervorragenden Abschnitt (16, 17) aufweisen, der über einen Aufnahmebereich (18, 19) verfügt, der bezüglich eines Transportstiftes (10, 11) formangepaßt ist.

5. Vorrichtung nach einem der vorhergehenden Ansprüche 1 bis 4, dadurch gekennzeichnet, daß die antreibenden und formgebenden Endscheiben (8, 9), die drehend angetrieben sind, wie eine Ballen aufwindende Vorrichtung arbeiten.

6. Vorrichtung nach Anspruch 5, dadurch gekennzeichnet, daß die Endscheiben (8, 9) schwenkbar durch eine Armkonstruktion (22) gehalten sind, die eine zum Führen der Endscheiben (8, 9) zwischen einer ballenden Stellung (I) und einer herausgeschwungenen Stellung (II) passend eingerichtete Längsausdehnung (D) aufweist, um nachfolgend einen gepreßten Ballen (5) in einen Kunststoffilm oder einen ähnlichen Einschlagbogen einzuwickeln.

7. Vorrichtung nach einem der vorhergehenden Ansprüche 5 bis 6, dadurch gekennzeichnet, daß die Endscheiben (8, 9) axial wirkende Ballenbefestigungsmittel (25, 26) aufweisen, die auf der Innenseite (8B, 9B) einer Endscheibe (8, 9) zwischengefügt, aus dem Ballenpreßabschnitt der jeweiligen Endscheibe heraus verfahrbar und als ein durch die Endscheiben (8, 9) hindurchragendes Gestänge ausgebildet sind, das von einer axial beweglichen, antreibbaren Scheibe (280) über in Laufbahnen (29) der Scheibe aufgenomme Laufmittel (30) antreibbar geführt ist, wobei die Laufmittel mit dem Gestänge (25, 26) verbunden sind.

8. Vorrichtung nach einem der vorhergehenden Ansprüche, dadurch gekennzeichnet, daß die Preßmatte (3) aus einer Vielzahl fest verbundener, schwenkbar gegliederter, planer Stäbe (32, 32A, 32B) aus Metall oder anderen Hartmaterialien ausgebildet ist und einander gegenüberliegende, antreibende Zahngliedteile (12, 13) aufweist, die jeweils Endkantenseiten (32¹,32²) zugewandt sind.

9. Vorrichtung nach einem der vorhergehenden Ansprüche, dadurch gekennzeichnet, daß die Preßmatte (3) formgebend von einem bewegbaren Führungsrahmen (33) geführt ist, um eine im wesentlichen ringförmige Kompressionskammer (6) auszubilden, die unterteilt (34 - 36) und mit Kraft beaufschlagbar ist, um zwischen einer herausgeschwungenen geöffneten Balleneinzugsstellung (III) und einer eingeschwungenen geschlossenen Stellung (I) schwenkbar zu sein, und daß Lagerungsmittel (41, 42) entlang des Führungsrahmens (33) vorgesehen sind, die mit der Oberfläche (3A) der Preßmatte zusammenwirken, von der Kompressionskammer (6) abgewandt und vorzugsweise als Rollenlagerungen (43) ausgebildet sind.

## Revendications

1. Appareil (1) dans une installation (2) de paquetage en ballots ronds pour des marchandises comme, par exemple, des déchets, des matériaux fibreux et analogues, comprenant une partie de compression (3) pouvant être entraînée pour recevoir et comprimer les marchandises voulues ainsi qu'une partie de sortie (4) du ballot comprimé (5), caractérisé, en ce que la partie de compression comprend un tapis sans fin (3), qui peut être entraîné, guidé et aussi déformé pour constituer une chambre de compression (6), dans lequel la partie d'entraînement du tapis (7) est constituée par des paires de disques d'extrémité, rotatifs (8, 9), lesquels présentent des liaisons d'entraînement (10-13) qui coopèrent avec le tapis de compression (3).

2. Appareil selon la revendication 1, caractérisé, en ce que des moyens de transmission d'énergie (10, 11) qui sont distribués le long d'au moins une des faces (8A, 9A) des disques d'extrémités, orientés vers l'extérieur de la chambre de compression formée (6) coopèrent avec des moyens d'engrenages (12, 13) distribués sur le long du tapis etalé.

3. Appareil selon la revendication 2, caractérisé en ce que les moyens de transmission d'énergie sont formés par des axes de convoyeur (10, 11) dépassant des disques d'extrémité (8, 9) dans la direction axiale et en ce que le tapis (3), le long de son bord latéral, présente des bossages (12, 13) distribués avec un intervalle régulier (A) entre deux bossages successifs.

4. Appareil selon la revendication 3, caractérisé en ce que les bossages (12, 13) présentent une partie (16, 17) qui dépasse radialement d'un corps essentiellement cylindrique (14), lequel comporte un espace de réception (18, 19) de forme adaptée à un axe de convoyeur (10, 11).

5. Appareil selon l'une quelconque des revendications 1-4, caractérisé en ce que les disques d'extrémité d'entraînement et de mise en forme (8, 9) qui sont entraînés en rotation jouent le rôle d'un dispositif élévateur de ballot.

6. Appareil selon la revendication 5, caractérisé en ce que les disques d'extrémité (8, 9) sont supportés en pivotement par une construction à bras (22), qui présente une longueur développée (D) apte à déplacer les disques d'extrémités (8, 9) entre une position de paquetage (I) et une position basculée vers l'extérieur (II) pour délivrer un ballot comprimé (5) en vue de son enveloppement ultérieur en matière plastique ou par une enveloppe analogue.

7. Appareil selon l'un quelconque des revendications 5-6, caractérisé en ce que les disques d'extrémité (8, 9) présentent des moyens de fixation du ballot (25, 26), agissant dans la direction axiale, introduits à travers la face intérieure (8B, 9B) d'un disque d'extrémité (8, 9) et pouvant être entraînés en dehors de la partie de compression du ballot dudit disque d'extrémité respectif lesquels sont constitués par des tiges s'étendant à travers les disques d'extrémité (8, 9), guidées et actionnées au moyen d'un disque actionneur mobil dans la direction axiale (280) grâce à des moyen de roulement(30) reçus dans les pistes (29) du disque, lesquels moyens de roulement sont reliés aux tiges (25, 26).

8. Appareil selon l'une quelconque des revendications précédentes, caractérisé en ce le tapis de compression (3) est formé par plusieurs lattes de forme plate articulées en pivotement, reliées serrées (32, 32A, 32B) en métal ou autre matériau dur et qui présentent des moyens d'engrenage d'entraînement (12, 13) sur le bord de leurs extrémités respectives opposées (32¹, 32²).

9. Appareil selon l'une quelconque des revendications précédentes, caractérisé en ce que le tapis de compression (3) est formellement guidé par une structure de guidage mobile (33) pour former une chambre de compression principalement annulaire (6) la structure est divisée (34-36) et actionnée à force pour basculer entre une position ouverte basculée à l'extérieur (III) de retrait du ballot et une position de fermeture basculée à l'intérieur (I), et en ce que des moyens de paliers (41, 42) sont prévus le long de ladite structure de guidage (33) coopérant avec la surface 3A du matelas de compression, opposée à la chambre de compresion (6), de préférence des paliers à rouleaux (43).
